# EUROPEAN PATENT SPECIFICATION

(11) **EP 1 092 183 B1**
(45) Date of publication and mention of the grant of the patent: **26.11.2003**
(21) Application number: 97937516.9
(22) Date of filing: 25.07.1997
(51) Int. Cl.: G06F 3/00

(54) **A METHOD FOR COMPENSATING POSITIVE OR NEGATIVE EMOTIONS, AN APPARATUS FOR PRODUCING AN OPTICAL AND/OR ACOUSTIC REACTION AND A USE OF SUCH AN APPARATUS**
VERFAHREN ZUR KOMPENSATION VON POSITIVEN UND NEGATIVEN EMOTIONEN, GERÄT ZUM ERZEUGEN VON OPTISCHEN UND/ODER AKUSTISCHEN REAKTIONEN UND VERWENDUNG EINES SOLCHEN GERÄTES
PROCEDE SERVANT A EQUILIBRER LES EMOTIONS POSITIVES ET NEGATIVES, DISPOSITIF SERVANT A PRODUIRE UNE REACTION OPTIQUE OU ACOUSTIQUE ET UTILISATION DE CE DISPOSITIF

(30) Priority: 26.07.1996 DE 19630361; 11.09.1996 DE 19636831
(43) Date of publication of application: 18.04.2001
(73) Proprietor: Wittkötter, Erland Dr., 32257 Bünde (CH)
(72) Inventor: Wittkötter, Erland, Dr., 32257 Bünde (DE)
(74) Representative: Behrmann, Niels, Dipl.-Ing.
(86) International application number: EP9704058
(87) International publication number: WO98004968

(56) References cited:
- WO-A-95/35135
- US-A- 5 271 627
- US-A- 5 354 057
- YASUHITO SUENAGA ET AL: "HUMAN READER: AN ADVANCED MAN-MACHINE INTERFACE BASED ON HUMAN IMAGES AND SPEECH" SYSTEMS & COMPUTERS IN JAPAN, vol. 24, no. 2, 1 January 1993 (1993-01-01), pages 88-101, XP000417666
- "SCENT GENERATOR" IBM TECHNICAL DISCLOSURE BULLETIN, vol. 38, no. 11, 1 November 1995 (1995-11-01), page 429 XP000547415

## Description

The present invention relates to a method for compensating positive or negative emotions, an appartus for producing an optical and/or acoustic reaction and a use of such an apparatus. In particular, such an invention is to be viewed in connection with technical embodiments of a games idea with which users of a data processing apparatus - the widespread personal computers (PCs) are suitable here - are afforded the possibility of reducing intellectual or emotional stress conditions by causing the reaction on the optical and/or acoustic output units of the PC with the manual or physical interaction, and thus promoting joy and productivity in terms of working on the PC in a harmless and non-destructive manner.

Any regular user of a DP-apparatus knows feelings of fury, helplessness or aggression if due to incomprehensible and unpredictable events or reactions the computer displays results or assumes operating states which are not in accordance with the expectations of the respective operator - for example if the computer crashes, unintentional erasure or disappearance of laboriously inputted texts, the reaction, which is not in conformity with expectations, of an installed module or driver, or uncontrolled misrunning of a program module which has just been written.

It is known from behavioural psychology that the persons affected in that way can be afforded a safety value in particular by physical activity - cross-country running, cycling, chopping wood and the like - in order to compensate for or reduce emotions of that kind (which are generally acknowledged as having a detrimental effect on working productivity and enjoyment).

However it is precisely in modem everyday office life that the use of physical options of that kind - for example with sporting equipment - in order to compensate for negative emotions which occur in connection with operating on data processing apparatuses is expensive and of low practicality.

Also, it can be observed that positive emotions - feelings like triumph, euphory, or happiness - may similarly lead to detrimental effects on work productivity, particularly in a technical or computer environment, if no suitable compensating mechanism is provided for the person concerned. Also, it is assumed that expressing positive emotions may in certain circumstances even improve productivity.

From WO 95/35135, an apparatus as well as a method for operating the same, is known in the form of a video baseball-simulating game that allows a player to physically swing a baseball bat being an interface device to a computer game console. By provoking simulated displays on a video screen, and by responding thereto with movements of the bat, the person is capable of interacting with the video game computer. Also, the known device may principally be able to compensate for negative emotions by the player through the playing of the game, however, the game might just as well provoke frustrations or a negative emotional build-up on behalf of the user, depending on the individual playing perception.

Therefore, a principal disadvantage of such a known video game is that there does not exist a clear one-to-one correspondence between a computer interface device used as a specifically designed, predetermined emotion receiver and a corresponding video output signal, similarly designed and intended to compensate the emotion. Further, in a conventional video game that may be executed simultaneously with another user program on a computer, there is never a clear, predetermined activation and/or deactivation of the game program vis-á-vis the other software, so a final action of returning to a user program (that has been interrupted for carrying out potentially relieving activities) will be at the discretion and responsibility of the user. Consequently, a full autonomous compensation routine that automatically leads the user back to the normal operation is not possible, and, consequently, the possibilities of arriving at an optimized emotional compensation remain deficient.

Therefore the object of the present invention is to provide an improved compensating method and apparatus for a person working on a personal computer, particularly suited for reducing or compensating built-up or developing (positive or negative) emotions.

That object is attained by the method having the features of claim 1, and by the apparatus having the features of claim 6. Advantageous developments of the invention are disclosed in the dependent claims.

In connection with the present invention, the term "interface device" means any specifically designed device suited for a predetermined manual, physical interaction with the person operating, including devices to be (actively) held in the hands, and devices (passively) standing on their own. Also, a "normal routine operation" of a personal computer in accordance with the invention means any mode of regular operation that the data processing apparatus is expected to perform according to its purpose (excluding, of course, an operation suitable for compensating positive or negative emotions), permitting for an interruption by the audio and video output signals.

Human aggression can be compensated for by substitutive behaviours. A target, here in particular a computer, will be punished symbolically and, in a sense, be held responsible for the user's sense of failure, resulting, e.g., from the complexity of computer programs or inexplicable mistakes by the operator. By performing such substitutive behaviour, the user can avoid feeling "guilty", even if in many cases he is actually to blame for his difficulties. With a rapid substitutive behaviour a user can put his sense of responsibility behind him and laugh at the gag or simply be amused. As a positive consequence of this therapeutic action, a person will be able to continue his work in a more relaxed frame of mind.

The joy and satisfaction of using an interface device shaped, e.g., like a hitting stick and provided as a peripheral computer accessory, to strike a machine facilitates dealing with computers in a more relaxed manner and encourages a more confident attitude toward computers. The expressed dissatisfaction of users with home computers suggests that the stick can be used to obtain emotional relief.

The user of the present invention is able to instantly relieve the frustrations of everyday life caused by machines, which may offer a healthy illusion that man can strike back and that the individual is not alone with his sense of helplessness and desperation in the face of modem information technology.

Although PCs are faster, have much better interfaces, and users are continually being promised more convenient computer use, it is unlikely that computer interface technology will ever reach a state of perfection in which users will never again be frustrated by a computer.

A further deficit in present-day computer technology is its impersonal, inanimate appearance and the missing sense of its being responsive to punishment and praise. In particular, if a user would like to express or show emotions toward a PC, the process of compensating for negative emotions and expressing positive emotions in accordance with the present invention may be amplified by additional predetermined graphics and sensory areas, the designs thereof taken from everyday experience. These graphics and areas can be designed in a fashion that invites users to hit or to make contact with these device in a more gentle manner.

The link in the user's perceptions between the PC and these external devices is created by the registration of the predetermined manual or physical action like touching, contacting, striking, hitting and moving by a user and some immediate audiovisual or sensory reaction by the PC.

Positive emotions like relief, happiness, surprise, and hope can be expressed by softly touching a closely related and linked object, as well as by an observable physical response, such as a facial expression, gesture or posture. The detection of these expressions of human behaviour in front of a PC are paid insufficient attention in connection with the man-machine relationship.

The kind of messages that are passed on to the PC in the perception of the user must be seen in relation to the design and the usual associations with the instrument and the kind of animation that is displayed when the device is used. Therefore, a club or an active hitting instrument is in general associated with destructive behaviour, so that normally a user will associate them with compensatory negative emotions.

On the other hand, a sensory area able to detect physical contact can be seen as an interface for positive emotions. While a soft touch would elicit positive associations and animations on a PC, a blow to the same area could be associated with negative emotions and could therefore elicit animations expressive of users' destructive or negative feelings and fantasies.

An instrument able to compensate for users' negative emotions and amplify positive emotions when working with a PC can also be used as an therapeutic instrument for persons who are emotionally stressed due to excessive or highly stressful work on a PC. These persons would be able to stimulate their emotions, that is ones arising from human, non-computer-dominated reality and its circumstances.

Positive emotions can be used to motivate a user to improve his productivity and work quality. The use of instrumental assistance that provides direct contact with and a response from the PC, could help to stimulate and improve users' motivation and positive emotional disposition, whereby the design and associated preferred notion of the correct use of this device affect the perception of the goals to be realized by using it.

Furthermore, the personification of a PC has the advantage of displacing feelings of shame, blame and guilt to something that, according to the invention, does apparently not care.

On the other hand, the additional interactive hardware interface designed to address the PC user's emotions can only improve users' feelings of meaningfulness and significance by responding to verbal commands. In this way an external device has a chance to be seen as a sympathetic personification of the PC.

Advantageously, the predetermined physical actuation of the interface device by the operator permits impulsive physical compensation for accumulated negative emotions, and in addition, the 'success' of the action of the operator is directly signalled back to the operator by means of the visual and/or acoustic output signal which is generated as a reaction to, e.g., a hitting movement.

As, moreover, such a hitting movement acts on the PC or causes a direct reaction on the part of the computer - more specifically that unit which causes the negative experience on the part of the operator in accordance with the instantaneous emotional assessment of the operator, the apparatus according to the invention can advantageously provide for particularly fast, specific and direct compensation for the negative feelings on the part of the operator. It is to be expected that this can markedly enhance working productivity and enjoyment, precisely also of impulsive or extroverted employees, even in connection with an otherwise passive, silent, mercilles, and non-reacting computer.

The inventive concept is embodied in that a hitting movement of the operator results in a single reaction which is limited to the prededermined time, like a few seconds, and which in addition does not signify an interaction (going beyond same) with the computer: the purpose of the apparatus according to the invention lies in the clear, clearly discernible manifestation, which is glaringly different from the normal mode of operation, of the visual or acoustic reactions produced; over and above that, there is no further influence on operation of the data processing apparatus. On the contrary, after termination of the reaction the computer returns to the normal mode of operation, as prior to the interruption.

A therapeutic benefit which goes beyond that, in the case of negative emotions, lies in the substitute act on the part of an operator of symbolically punishing the computer and symbolically making it responsible for the fact that, by virtue of the complexity of data processing, the user has made an apparently incomprehensible operator error. The substitute action provides that it is not the actual causative agent, possibly the operator, that sees himself as being responsible, but can put the responsibility aside from himself by virtue of rapid substitute action in order then to be able to continue his work in an emotionally more relaxed state as a consequence of that therapeutic action. The technical apparatus to be designed in accordance with the invention promotes and assists with that aim in the optimum manner and is also simple and inexpensive to produce.

In accordance with a preferred embodiment which, in this respect, can be considered as the best mode of carrying the invention into effect, the hitting device has at least one sensor for detecting the hitting movement, which on the one hand permits directionally independent detection of the hitting movement, and which on the other hand enables the generation of at least two stepped or graded detection signals: thus to achieve original and particularly effective games actions, it is desirable, to begin with, to detect when the operator grabs or similarly touches the hitting device, and as a reaction thereto to generate a first output signal which then, as a reaction to the strike or hit performed (second stage), results in a further optical and/or acoustic output signal.

In a particularly preferred manner, and to make handling flexible, the hitting device is coupled to the personal computer or the image and/or sound output device connected upstream thereof, in a wire-less manner, for example by means of a radio, infra-red or ultra-sound portion, instead of using a cable. The electrical power which is then necessary in the hitting instrument could be produced by suitable batteries, solar cells or modules with a generation effect.

In order to perform a physically particularly effective hitting movement (and thus to achieve an optimum - therapeutic - aim in accordance with the invention), the hitting device is in the form of a club or cudgel which, for reasons of mechanical loading, has a preferably flexible hitting portion, and in which the sensitive electronic detection and evaluation means is contained in a protected fashion in the gripping or handle portion.

A design configuration for the club which has a bar arrangement covered by a flexible covering, has been found to be particularly suitable in terms of durability, ease of production and insensitivity to damage.

The visual and/or acoustic reaction to be produced on the data processing apparatus depends on the intended playing or games purpose or the area of use which is respectively involved, and can be adapted to specific needs.

In accordance with a further advantageous development of the invention, it is provided that the hitting instrument has on the gripping portion a sensory output means which for example is in the form of a vibration or motion generator. Then, in that way, after the hitting instrument has been touched by the user, a vibration can additionally be produced, which the user can then feel for example in the form of a shaking or trembling effect or the like reaction, in accordance with the concept of the present invention.

Furthermore, in accordance with a development of the invention, it is possible for the audio-visual output by the data processing apparatus to be supplemented by an additional optical and/or acoustic output module which is arranged on the hitting instrument itself. Such a module which for example can be in the form of an individual lamp or a chain of lamps on the hitting instrument would then be capable of reinforcing the visual impression and advantageously enhancing the playing humour.

As a further, preferred embodiment of the invention, three-dimensional figures similar to animal heads or a bust representing the head of a human being can be used as targets equipped with internal devices able to register external blows. Additionally, these heads or parts of these heads can be moved by mechanical levers. In this manner flexible verbal control, together with simulated human speech sounds or animal noises, may provide an additional interface for the man-machine interaction. These interfaces can additionally be used to output errors or mistakes as commands addressed to the user. In this way the emotional interface could amplify the preference of targeting the users' aggressions to this additional interface, instead of to the PC hardware itself. On the other hand, the PC itself would be personified and the user could flog and punish the machine for errors and comments with an active hitting instrument or by repeatedly striking this interface, which serves as an detection instrument for blows of the hand, foot, head or knee.

These busts, resembling, e.g., marble statuary busts, may be struck like punching bags. Touching and/or hitting detection instruments would be included in or on the bust. With the audiovisual output related to this device the user should continue or should be stimulated to express his feelings towards the PC. The graphics and the sensory areas should give the user the impression and illusion that his feelings are being communicated to the inner workings of the PC.

Blows by a user could be additionally stimulated by comments given by the device, like, "Come on, hit me" or " Go ahead, let your feelings out."

On the other hand, areas that must be contacted gently in order to express positive emotions toward the PC should be closely associated with specific sensory areas of living creatures, such as skin, hair or fur, so that caressing these areas would be a natural emotional expression by a user who is working productively with a PC and positively disposed toward it.
A further alternative realization can be seen in a passive sensory area that could be fixed or fastened to the PC on the monitor, mouse or other external surfaces. A sensory area around the border of the monitor could be used to detect the direction of blows.

Different and separate areas for touching the passive sensory interface could send different signals to the PC that would thereby be differently interpreted by the software. The user is able to differentiate his emotional expressions more precisely. Thus softly touching the cheek of the marble bust would be assigned a different meaning in the user's perception than touching the ear or hair.

The external emotional PC interface, e.g., a marble bust, is able to operate in an interactive face-to-face dialogue with the user, Thereby this interface could initiate through some software features a process of stimulating positive emotional reactions in the user. A controllable audiovisual and sensory capacity of this emotional interface could be used to initiate a verbal or non-verbal man-machine dialogue.

The active hitting instrument as one aspect of the invention must first be touched or gripped before the PC can be struck. The detection of touching, gripping or taking hold of this device are associated with an expectation that at an unspecified moment something destructive will happen. In particular, the user feels an urge to destroy something or would like to act out a destructive fantasy on a machine blamed by him as the cause and source of his negative feelings. The same effect is provided by passive hitting detection instruments that must be struck by the hand, fist or foot. The blow would come without warning. Therefore, the reaction upon hitting could be seen in the user's perception as a healthy scare or fright given to the PC.

On the other hand, softly touching the emotional interfaces could stimulate a forgiving, appeasing and conciliatory interaction with the PC. The marble bust could display and articulate pleasure gained by accomplishing a certain task. This feeling of happiness and pride in doing a job well, as shown by the periphery, could improve the emotional relationship between man and machine.

Further advantages, features and details of the invention will be apparent from the following description of specific embodiments and with reference to the drawings in which:
Figure 1 shows a circuit block diagram of the apparatus according to the invention for producing an optical and/or acoustic reaction on a data processing apparatus as a reaction to a hitting movement;
Figure 2 is a sectional view of a hitting device which in accordance with a development is in the form of a club and which, in this respect, is to be viewed as the best mode of the invention;
Figure 3 is a partly sectional perspective view of an acceleration sensor for use in the present invention, and
Figure 4 shows a circuit diagram with an example of the circuitry configuration of the sensor or the signal processing means in the hitting device according to the invention.

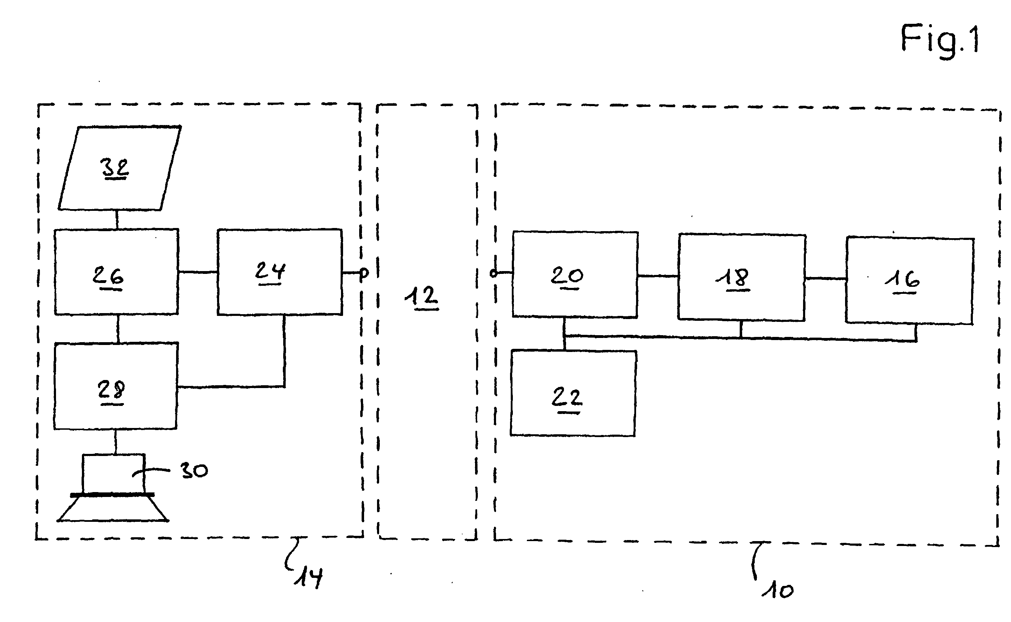

In accordance with the present invention, the hitting device 10 which is shown at the right in the block circuit diagram in Figure 1 serves to enable the operator to perform a hitting or striking movement and to convert the acceleration or a possible impact, which is connected to that striking movement, into an electrical signal.

A connecting module 12 makes a connection between the hitting (striking) device 10 and a reaction module 14 which is itself a component of a data processing apparatus or co-operates directly with such an apparatus (and which can also be in the form of a computer program in such an apparatus).

As shown in the block circuit diagram in Figure 1, the hitting device 10 has a motion, acceleration or impact sensor 16 connected to a signal processing unit 18 which acts as a protocol generator and which in turn co-operates by way of an interface module 20 with the connecting module 12. The sensor 16, the signal processing unit 18 and the interface 20 are operated by way of a power supply unit 22 which is preferably battery-fed.

The reaction module has in turn an interface 24 for receiving and conducting the electrical signals transmitted by way of the connecting module 12 and supplies them on the one hand to a visual reaction module 26 and on the other hand to an audio reaction module 28.

While the audio reaction module 28 is connected to an audio output module 30 diagrammatically shown as a loudspeaker 30, the visual reaction module 26 co-operates with a visual output unit 32.

In the described embodiment the components 24 to 32 of the reaction module 14 are embodied by normal functional units of a conventional personal computer (PC) which by means of its video screen can perform the visual output according to the modules 26, 32, and also converts the audio side of the reaction module by way of sound cards or the like sound processing devices in conjunction with loudspeakers. Then, in an otherwise known manner, preferably by means of suitable software control and activation of suitable interrupts, the signal received by the interface 24 would be converted into predetermined stored signal reactions in respect of the modules 26, 28 in the optical and audio modes.

In addition, in the illustrated embodiment the coupling of the hitting device 10 to the reaction module 14 is effected by way of the connecting module 12 in a wire-less mode and more specifically in the form of a radio connection, wherein the connecting module 12, in a manner not shown in greater detail, has suitable high-frequency transmitting and receiving devices with suitable electronics for radio transmission of the hitting signals of the hitting device 10.

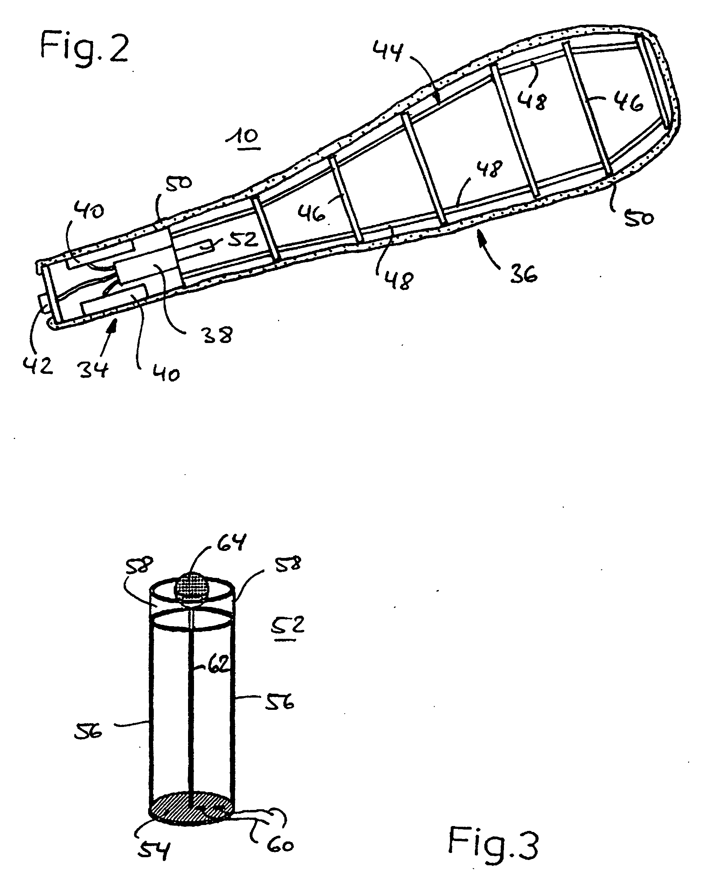

Figure 2 shows the mechanical structure of the hitting device 10 in accordance with the present embodiment and the arrangement of the necessary sensor and electronic components therein.

The hitting device 10 shown in Figure 2 is in the form of a club or cudgel which at its gripping or handle end has a gripping or handle portion 34 and, opposite thereto, a hitting or striking portion 36.

From a mechanical point of view the gripping portion 34 is embodied by a cylindrical body which offers space for an electronic control device 38, gripping sensors 40 connected thereto and an interface unit 42 in the form of a radio transmitter. The arrangement also has a battery compartment (not shown) which is to be opened at the gripping end, for the power supply for the electronic control unit.

The hitting portion 36 of the club 10 is afforded by a bar arrangement 44 of flexible or flexibly interconnected bars wherein - as shown in Figure 2 - substantially round or circular transverse struts 46 which increase in width in a club-like configuration are connected by longitudinal struts 48. By making the struts 46, 48 from fibreglass or suitable plastic material, it is also possible to ensure that the bar arrangement 44 has the fracture strength or elasticity which is appropriate for the intended hitting purpose.

As shown in Figure 2, the gripping portion 34 and the hitting portion 36 are covered with a covering 50 which is preferably formed in one or more layers from foam material or neoprene and which is matched to the bar arrangement 44 and the intended purpose, in regard to weight, elasticity and other surface properties. For reasons of improved protection or to produce a particular optical effect moreover the coating 50 may externally have a thin textile, colour, paint, synthetic resin or plastic layer.

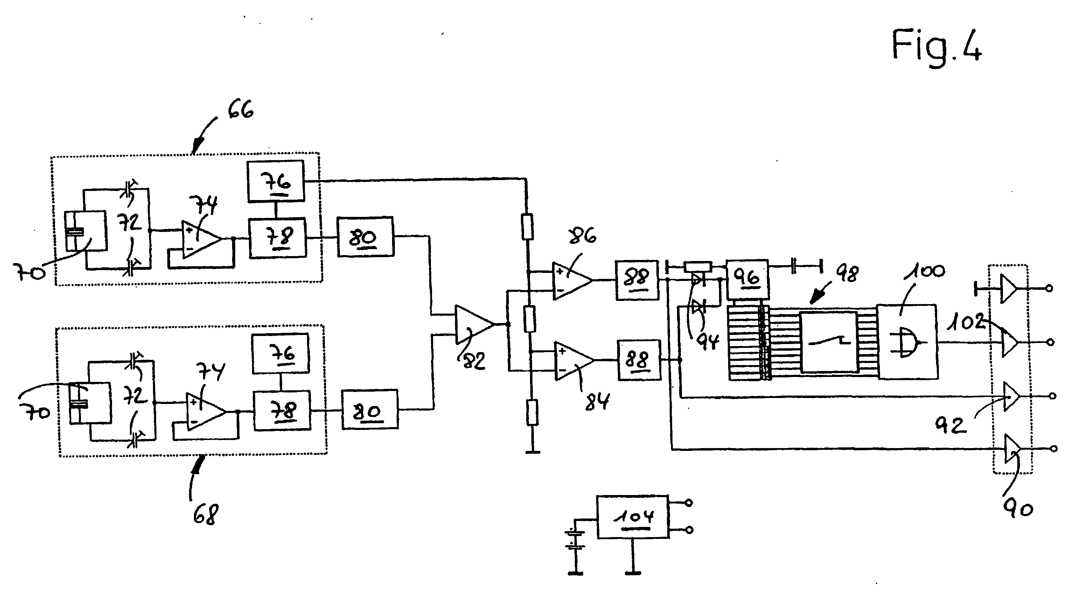

Figure 2 also shows an elongate acceleration sensor 52 which, together with the gripping sensor 40, performs the function of the sensor module 16 which is shown in Figure 1 and which - fitting to the electronic control module 38 - extends into the internal space in the hitting portion 36. The sensors 52 and 40 respectively could also be used alternatively to each other - for example in connection with the circuit described hereinafter with reference to Figure 4.

Figure 3 is a diagrammatic perspective view showing the structure of the electromechanical acceleration sensor 52.

Extending from a base plate 54 are electrically conducting support struts 56 which at one end hold a metal ring 58 and which are conductingly connected to contact connections 60 extending out of the base plate 54.

Also extending from the base plate 54 is a metal ball 64 which is held on a vertical bar 62 and which in accordance with a respective deflection or bending movement of the vertical bar 62 - is held in a basic position in the centre of the ring 58 and which, due to the action of inertia forces when the sensor 52 is subjected to acceleration, is deflected until the ball 64 comes into contact with the ring 58, at a predetermined threshold. At that time, an electrical contact is closed by way of the contact connections 60 and used for the purposes of external evaluation, and in particular an interface (for example RS 232) could be connected in otherwise known manner to the connections 60.

Accordingly, by suitable dimensioning of the circle diameter or length and/or elasticity of the vertical bar 62, the acceleration sensor 52 permits detection of an acceleration acting on the sensor, and provides for closing of the contact when a suitable threshold value is exceeded.

Reference is now made to Figure 4 to describe a possible form of the circuitry configuration of the sensor or the downstream-connected electronic detection means, as could be used in connection with the above-illustrated mechanical embodiment or individual sensors therefrom.

Sensor units 66, 68 are acceleration sensors of known kind, as are produced for example In the form of directionally sensitive airbag sensors which, besides an oscillator 70 and variable-capacitance elements 72, each have a buffer 74, a reference voltage module 76 and a demodulator 78.

As such a sensor module 66, 68 is only acceleration-sensitive along one direction, the present embodiment utilises two sensors which are suitably displaced relative to each other in order to be able to detect accelerations or decelerations in axes which are at 90° relative to each other.

For the purposes of filtering out high frequencies or the dc voltage component, connected downstream of the sensors 66, 68 are band pass filters 80 whose outputs go to a summing means 82.

The output signal thereof is applied to two comparators 84, 86 which at their respective non-inverting inputs receive a constant voltage of different values. In that way the switching thresholds of the comparators 84, 86 can be so adjusted that the lower comparator 84 already reacts to slight movements (for example when the hitting device 10 is touched or lifted), while the upper comparator 86 produces a signal only when a hit is made.

Monoflops 88 are triggered by the output signals of the comparators 84, 86 and generate a logic '1'-signal as a reaction to activation for a predetermined time, at their outputs. Those signals pass on the one hand to a respective interface driver 90, 92 (for example RS 232) for further treatment and processing and on the other hand the monoflop signals are passed to a further interface driver 102 by way of a serial bit pattern unit made up by an OR-gate consisting of diodes 94, a decimal counter 96, a Dip Switch Bank 98 and a further OR-gate 100, whereby on the PC side a distinction can be made between different sensor circuits of the present kind.

In the described embodiment the power supply is by way of battery voltage which is transformed into the required stabilised voltages by means of a dc voltage transformer 104.

Particularly when the above-described sensor unit is connected by way of a fixedly wired connecting module 12 to the reaction module in/on the PC, an alternative option for the power supply for the electronic sensor arrangement lies in the use of a suitably set interface line circuit of the PC.

As a further alternative, and in particular for wireless operation (for example radio or infra-red connection of the hitting device), there is the possibility of powering the electronic system which is preferably of a low-consumption design configuration (for example CMOS) by means of solar modules and/or generators for converting motion into energy, in or on the hitting dub itself.

It is self-evident that - depending on the respective sensor used - suitable signal processing is effected, which produces a signal which is usable by the PC (reaction module); in that respect signal production is not limited to the two different handling operations which can be involved in the embodiment shown in Figure 4 (touching or picking up on the one hand and hitting on the other hand); on the contrary it is a matter for the discretion of the man skilled in the art to electronically detect a corresponding plurality of modes of movement (or even only one thereof).

More specifically, in accordance with an alternative embodiment the hitting device used in accordance with the invention could comprise a - suitably elastic - hitting surface which has an integrated pressure or hitting sensor which can then be activated by being hit with the fist of a person or by being actuated in like manner, for the purposes of electronic signal generation.

In addition the specific design configuration adopted for the hitting device 10 is a matter for the discretion of the man skilled in the art who will select a mechanical structure and configuration which is suited to the respective (playing) purpose. In that respect the sensitive electronic arrangement as shown in Figure 2 would preferably be accommodated at the handle end and protected from hitting or damage in the hitting device so that even a vigorous loading (which is possibly to be expected) does not result in destruction of the hitting device according to the invention itself.

By virtue of a suitable choice of material for a covering, for example a laminated foam rubber, it can be on the one hand light but on the other hand flexible and strong and impact-resistant in itself. While such a material could be smoothed and stiffened for example by heating the surface, such an effect could also be achieved by covering it with further material, for example textile or plastic material, or by painting.

Alternatively the hitting portion of the hitting device may also be constructed without an inner bar arrangement which needs to be covered: more specifically comparable elasticity and strength properties can be achieved for example by using a coating which is produced for example in the manner of a sewing cutting pattern and which is stiffened or reinforced in punctiform manner at suitable locations by stiffening means or the like reinforcing means. In particular there would also be the possibility here of exerting an influence by different structuring in respect of the inner or outer surfaces respectively of the coating produced in that way.

As a further alternative it would be possible for the hitting device to be constructed without an inner cavity therein, that is to say for example in one piece or foam-filled with foam material or the like soft elastic material. Further advantageous, any such foam material could have electrical properties changing upon physical impact like gripping or hitting: This way, a simple sensor device can be implemented, providing a signal that may be evaluated, sampled digitized or processed in another suitable manner for detecting the physical action applied to the device.

As a further altemative, in connection with one of the above-described mechanical embodiments of the hitting device, it would be possible for necessary acceleration sensors to be arranged loosely or distributed in the interior thereof.

While the illustrated example used mechanical sensors or so-called airbag sensors, simple possible ways of hitting detection would also involve for example utilising the piezoelectric effect and/or a variation in capacitance.

In regard to the construction in terms of a game, for example in the case of two acceleration stages which are to be detected as in the described embodiment, a first reaction would occur in the computer (through the reaction module) as the reaction to the hitting device being touched or picked up, while for example the second signal would be generated and would be available for evaluation, only as the reaction to an actual hit being made with the club 10. Thus, by suitable evaluation and subsequent influencing of operation of the PC, as a reaction to the hitting device being touched (picked up, first stage), the video screen could be caused to shake or quiver, that is to say individual objects whose images are formed on the PC video screen at the time move horizontally and/or vertically with a shaking or quivering movement, or the size of such objects is distortion or altered (due to the action of the visual reaction module); at the same time an audio reaction could occur in such a way that the effect of a whimpering computer voice would be generated, possibly in conjunction with suitable speech output. The striking or hitting action with the club 10 (second stage) could then have the visual result that, by suitable actuation, a tearing pattern (for example in the form of a shattered pane of glass) would appear on the video screen, objects represented on the screen would move violently downwardly or an animation would appear on the screen, which would give the illusion of the screen shattering. A suitable sound reaction (due to the audio reaction module 28) would be clinking glass, a muffled falling noise, a scream or shriek, and/or insults and verbal abuse directed at the respective player. It seems a beneficial idea, for the respective visual and sound reactions, to allude to everyday metaphors with which the effect or the impression can be reinforced in a positive manner, on the part of the operator.

As an example, a voice may plead for mercy: "No, please ... no" or simply cry out: "No ...". A smiling person could be displayed on the screen as though suffering from the user's blows.

The reaction to striking can also be displayed, e.g., by cracks on the monitor screen followed by rattling sounds. Other effects are evoked by windows falling in vertical motion. These motions are followed by the dull crashing sounds of breaking glass. A more lavish animation is, e.g., a screen image that shatters into a heap of broken fragments. Furthermore, a previously smiling person could begin to look anxious, guilty and repentant after the stick has been used.

Further animations with allusions to everyday experiences offer a vast reservoir of additional potentially humorous software effects that can arouse the user's curiosity. All these gags elicited by touching and hitting or repeatedly striking can be embedded in a story.

Alternatively the stages of touching or picking up and hitting can be provided with images which for example in the first stage cause a smiling/laughing person to appear on the monitor, which person, after evaluation of the signal of the second stage (that is to say after the hitting device 10 has been used for hitting purposes) then exhibits a corresponding pain reaction or could give a scream or shriek and/or direct insults and verbal abuse at the user.

As a further alternative, in particular to achieve a positive effect for frequent computer users such as for example programmers or the like, it seems appropriate for the operating stage 'touching or picking up' to be provided with the image of a PC on the video screen, which image, after the hitting movement, is then converted into a visual scrap heap, combined with corresponding sound signals.

As a further alternative it would be possible to allude to known themes from films and literature, for example by tunes such as a "Once upon a time in the West" and associated shooting or explosion noises.

In particular in accordance with the invention an acoustic output can also be effected in terms of speech, whereby then in a suitable manner a voice which is preset in a tone that is as calming as possible speaks words or sentences which give suitable support for the intended purpose of the game.

Furthermore in accordance with the invention an audio-visual output (in addition or as an alternative) can be afforded by the hitting instrument itself. For example therefore a club designed as the hitting instrument could itself have a loudspeaker or suitable sound transducer and/or an optical display device, for example in the form of a lamp or a chain of lamps, whereby the acoustic and/or optical reactions are then outputted in the above-described manner.

A sensory reaction is also possible as a further reaction in accordance with the invention. In that respect then a suitable vibration module or the like could be provided in particular on the gripping or handle region of the hitting instrument, whereby then it is suitably activated as a reaction to the instrument being gripped and the user is caused to feel a vibration or shaking movement.

It will be appreciated that it is also in accordance with the invention to provide situation-specific or situation-comic hitting instruments and connect them to respectively associated design configurations of the transmission, video and audio output means, so that relevant or popular themes can be adopted and played. By way of example attention is directed for instance to the hitting instrument being designed in the form of a rolling pin.

Also, a voodoo theme including an appropriately configured, doll-shaped interface device is a possible embodiment of the invention. This device could then be operated upon by means of suitable needles.

A further way in which the club can be viewed is in the context of some sort of psychological counseling provided by this instrument in a Sigmund Freud mode. When the user touches the stick, a window appears containing a soothing aphorism, a maxim of Laotse or a nonsense sentence. These aphorisms can be played as sound files as well. Then the b low of the stick could be followed by the disappearance of the window accompanied by some sort of disappointed-sounding comments, like: "Oh, no ..." or "No, this is just not fair ...".

The active hitting instrument, as pointed out above, could be made of cellular plastic with an internal frame. This cellular foam is automatically deformed by the energy of each impact. The inner frame stabilizes the club overall, in particular above the section where the hand grips the club, which is relatively slender. So the danger has to be prevented that merely through its own weight the striking section will be strong laterally deformed near the handle.

The detection of touching and gripping an active hitting instrument or a sensory area of a passive hitting target could be realized by the change of electrical resistance in the deformed cellular foam or in the measuring of the sudden change in electrical resistance on the surface of the area touched by the user. The change in electrical resistance could be measured in a comparator circuit with one or several threshold values. The change in the position of touching could also be measured by the change in electrical resistance between differently positioned electrodes.

The sensor for registering the impact of blows consists of a simple pendulum spring which strikes a rod, whereby this contact is detected by an electrical circuit. The pendulum can consist of a coil spring in whose center a pin or rod is inserted. When an impulse is transmitted the spring begins to sway, and contact between the spring and the metal pin can thereby occur. This contact can be registered. The spring and the pin can be soldered or plugged into a fingernail-sized circuit board.

A further application of this invention could be seen in a device for a slot machine. The wheel that displays winning or losing could, e.g., be controlled by an active or passive hitting instrument like a club, baseball bat or punching bag. The joke in this game could be amplified by the compensation for the emotions present in the given situation.

Another application of the invention is for stimulating motivation while using fitness devices like sandbags or punching bags. An integrated hitting detection system could be connected to a PC. Sound that motivates a user of this device to further activities could be produced when the user strikes the device.

Another application of the invention could be found in a hitting instrument shaped like a boxing glove.

Furthermore, it is well known that aromas, e.g. scents or flavours, influence human emotions. The control of aromas emanating from the emotional interface could be used to improve positive or compensate negative emotions during a working session on a PC. Thereby dissipating an aroma by a touching or hitting movement could amplify the positive effect of using an external emotional PC interface.

It will be appreciated that the foregoing examples are given solely by way of example and depend on the respective purpose involved; depending on the technical configuration of the hitting device with the intended number of detection units (stepped or graduated in regard to the effect), it will be possible for the man skilled in the art, by means of a suitable design in respect of the reaction module or the video and/or audio units acting thereon, to provide scenes and involvement options on the part of the operator which are distinguished in the manner in accordance with the invention by creativity, humour and a certain degree of destructivity which is to be allowed to find expression in a peaceful manner.

## Claims

1. A method suitable for reducing positive or negative emotions of a person operating a personal computer (PC) by providing an instrument for substitute behavior comprising the steps of
- manually operating an interface device (10) provided as an additional, external interactive hardware interface, having a specifically designed mechanical structure and having sensor means (16), specifically adapted to detect predetermined physical contact and/or movement applied to said sensor means (16) by the person operating, said physical contact and/or movement being interpreted as a physical response to a predetermined positive or negative emotion by the person operating, said interface device (10) being connected to said personal computer;
- generating an electrical detection signal in response to said operating;
- electronically processing said electrical detection signal by said personal computer and electronically generating a predetermined, specifically adapted audio and/or video output signal on a PC video screen, or through a PC sound card, connected to the personal computer,
- said predetermined audio and video output signals being an immediate and specific reaction by the personal computer and directly triggered by said operating, suitable for visual or acoustic perception by the person such that a compensating effect for positive or negative emotions is achieved, said audio and video output signals interrupting a normal routine operation by said personal computer and being suitably different from any output of said data processing apparatus during said normal routine operation, and wherein a duration of a generated output signal is limited to a predetermined time and no interaction with the personal computer which goes beyond the generation of the output signal can occur during that time, before the personal computer returns to the normal mode of operation, as prior to the interruption.

2. The method according to claim 1, wherein the step of manually operating said interface device comprises predetermined movements of hitting, striking, gripping, patting, or caressing said interface device.

3. The method according to claim 1 or claim 2, wherein said output signals comprise a first output signal, produced in response to a first electrical detection signal, and a second output signal different from said first output signal, produced in response to a second electrical detection signal later than said first electrical detection signal.

4. The method according to claim 3, wherein said first electrical detection signal is generated in response to a predetermined gripping movement applied to said interface device by the person, and said second electrical detection signal is generated in response to a predetermined hitting or slamming movement applied to the interface device following the gripping movement.

5. The method according to one of the claims 1 to 4, wherein the step of generating an audio and/or video output on the personal computer comprises the displaying of a predetermined video picture or sequence of pictures, or the displaying of predetermined two-or three-dimensional animated pictures, and/or the outputting of predetermined voice or music signals.

6. Apparatus for producing an optical and/or acoustic reaction on a personal computer as a reaction to a manual operation for carrying out the method according to one of the claims 1 to 5, comprising:
an interface device (10) which is provided as an additional, external interactive hardware interface, having a specifically designed mechanical structure and having sensor means (16) for actuation by an operator by means of a predetermined physical contact and/or movement applied to said sensor means (16) by the person operating being interpreted as a physical response to a predetermined positive or negative emotion by an operator, and which is specifically adapted to detect the contact and/or movement thereof, and to produce an electrical detection signal as a reaction thereto,
a transmission unit (12) for receiving the detection signal and a video and/or audio output means to the personal computer (14) which is connected to the transmission unit (12) for electronically generating a predetermined, specifically adapted audio and/or video output signal on a PC video screen, or through a PC sound card, connected to the personal computer, as a reaction to the electrical detection signal, said predetermined audio and video output signals being an immediate and specific reaction by the personal computer and directly triggered by said operating, suitable for visual or acoustic perception by the person such that a compensating effect for positive or negative emotions is achieved, said audio and video output signals interrupting a normal routine operation by said personal computer and being suitably different from any output of said data processing apparatus during said normal routine operation, and wherein a duration of a generated output signal is limited to a predetermined time and no interaction with the personal computer which goes beyond the generation of the output signal can occur during that time, before the personal computer returns to the normal mode of operation, as prior to the interruption.

7. Apparatus according to claim 6 **characterized in that** the interface device is a specifically designed hitting device (10) having at least one acceleration or motion sensor (66, 68) which is so designed that a first, electronically evaluatable signal is produced as the reaction to the hitting device (10) being gripped by the operator, and a second, electronically evaluatable signal is produced as a reaction to a hitting movement by the operator.

8. Apparatus according to one of claims 6 and 7 **characterized in that** the transmission unit (12) is designed on the basis of radio, ultra-sound or infra-red signals for making a wire-less connection between the interface device (10) and the video and/or audio output means of the personal computer (14).

9. Apparatus according to claim 7 or 8 **characterized in that** the hitting device (10) is in the form of a club (10) with a gripping and a hitting portion (34, 36), wherein electronic components of the hitting device are provided in the interior of the gripping portion (34).

10. Apparatus according to claim 9 **characterized in that** the hitting portion (36) has a frame (44) which is covered with a layer (50) of flexible material and which forms a hollow cavity.

11. Apparatus according to one of claims 7 to 10 **characterized by** a predetermined vibration or motion device which has a sensory action and which is provided in the hitting device and which is so connected to the transmission unit (12) and constructed that a motion which can be felt by the operator is generated as a reaction to the electronically evaluatable signal.

12. Apparatus according to one of claims 6 to 11 **characterized by** an additional video and/or audio output means provided on the interface device.

## Patentansprüche

1. Verfahren, geeignet positive oder negative Emotionen einer einen Personal Computer (PC) bedienenden Person zu reduzieren, durch Vorsehen eines Instruments für eine Ersatzhandlung, die die Schritte aufweist:
manuelles Bedienen einer Schnittstelleneinheit (10), die als ein zusätzliches, externes interaktives Hardwareinterface vorgesehen ist, dass eine speziell entworfene mechanische Struktur und Sensormodul (16) aufweist, eine speziell angepasste zum Erfassen eines vorbestimmten physikalischen Kontakts und/oder Bewegung durch die bedienende Person angewendetes Sensormodul (16), wobei der physikalische Kontakt und/oder Bewegung als eine physikalische Reaktion zu einer vorbestimmten positiven oder negativen Emotion durch eine Bedienperson interpretiert wird, wobei die Schnittstelleneinheit (10) mit dem Personal Computer verbunden ist;
erzeugen eines elektrisch erfassbaren Signals in Reaktion auf die Bedienung;
elektronische Verarbeitung des elektrisch erfassbaren Signals durch den Personal Computer und die elektronische Erzeugung eines vorbestimmten, speziell angepassten Audio und/oder Video Ausgabesignals auf einem PC Videomonitor, oder durch eine PC Soundkarte, die mit dem Personal Computer verbunden ist,
das vorbestimmte Audio und Videoausgabesignal eine unmittelbare und spezifische Reaktion durch den Personal Computer ist und direkt durch die Bedienung betätigt wird, so dass durch die visuelle oder akustisch Wahrnehmung durch die Person ein Kompensationseffekt für positive oder negative Emotionen entsprechend erreicht wird, das Audio und Videoausgabesignal einen Normalbetrieb des Personal Computer unterbricht und das entsprechend verschieden von irgendeiner Ausgabe der Datenverarbeitungsvorrichtung während der Normalbetrieb ist, und wobei eine Dauer eines erzeugten Ausgabesignals auf eine vorbestimmte Zeit beschränkt ist und keine Interaktion mit dem Personal Computer, das über die Erzeugung des Ausgabesignals hinausgeht, während dieser Zeit auftreten kann, bevor der Personal Computer zu dem normalen Bedienungsmodus, wie vor der Unterbrechung, zurückkehrt.

2. Verfahren nach Anspruch 1, wobei der Schritt des manuellen Bedienens der Schnittstelleneinheit eine vorbestimmte Bewegung eines Schlags, Zuschlagens, Zupacken, Tätscheln, oder Streicheln der Schnittstelleneinheit aufweist.

3. Verfahren nach Anspruch 1 oder Anspruch 2, wobei das Ausgabesignal ein erstes Ausgabesignal aufweist, dass in Reaktion eines ersten elektrischen Erfassungssignals erzeugt wird, und ein zweites Ausgabesignal verschieden von dem ersten Ausgabesignal ausweist, dass in Reaktion zu einem zweiten elektrischen Erfassungssignal später als das erste elektrische Erfassungssignal erzeugt wird.

4. Verfahren nach Anspruch 3, worin das erste elektrische Erfassungssignal in Reaktion zu einer vorbestimmte zugreifenden oder zupackenden Handlung angewandt auf die Schnittstelleneinheit durch die Person erzeugt wird, und das zweite elektrische Erfassungssignal in Reaktion zu einer vorbestimmten Schlag oder Zuschlagbewegung angewandt auf die Schnittstelleneinheit, die der zugreifenden oder zupackenden Handlung folgt, erzeugt wird.

5. Verfahren nach einem der Ansprüche 1 bis 4, wobei der Schritt der Erzeugung der Audio und/oder Videoausgabe auf dem Personal Computer das Anzeigen von vorbestimmten Videobilder oder Folge von Bilder, oder das Anzeigen von vorbestimmten zwei- oder dreidimensional animierte Bilder, und/oder der Ausgabe einer vorbestimmten Sprach oder Musiksignals aufweist.

6. Vorrichtung zur Erzeugung einer optisch und/oder akustischen Reaktion auf einem Personal Computer als eine Reaktion auf ein manuelles Bedienen zur Durchführung des Verfahren nach einem der Ansprüche 1 bis 5, aufweisend:
eine Schnittstelleneinheit (10), die als eine zusätzliche, externe interaktive Hardwareschnittstelle, vorgesehen ist, die eine speziell entworfene mechanische Struktur und Sensormodul(16) zum Auslösen durch die bedienende Person aufweist mittels eines vorbestimmten Kontakts und/oder Bewegung durch die bedienende Person angewendet auf das Sensormodul(16) als eine physikalische Reaktion auf eine vorbestimmte positive oder negative Emotion durch eine Bedienperson interpretiert wird, und welches speziell angepasst ist den Kontakt und/oder Bewegung von dessen zu erfassen, und ein elektrisches Erfassungssignal als eine Reaktion davon erzeugt,
eine Übertragungseinheit (12) zum Empfang des Erfassungssignals und eine Video und/oder Audioausgabeeinheit auf dem Personal Computer (14) die mit der Übertragungseinheit (12) verbunden ist, zur elektronische Erzeugung eines vorbestimmten, speziell angepassten Audio und/oder Video Ausgabesignals auf einem PC Videomonitor, oder durch eine PC Soundkarte, die mit dem Personal Computer verbunden ist, als eine Reaktion auf das elektrische erfassbaren Signal, das vorbestimmte Audio und Videoausgabesignal eine unmittelbare und spezifische Reaktion durch den Personal Computer ist und direkt durch die Bedienung betätigt wird, so dass durch die visuelle oder akustisch Wahrnehmung durch die Person ein Kompensationseffekt für positive oder negative Emotionen entsprechend erreicht wird, das Audio und Videoausgabesignal einen Normalbetrieb des Personal Computer unterbricht und das entsprechend verschieden von irgendeiner Ausgabe der Datenverarbeitungsvorrichtung während der Normalbetrieb ist, und wobei eine Dauer eines erzeugten Ausgabesignals auf eine vorbestimmte Zeit beschränkt ist und keine Interaktion mit dem Personal Computer, das über die Erzeugung des Ausgabesignals hinausgeht, während dieser Zeit auftreten, bevor der Personal Computer zu dem normalen Bedienungsmodus, wie vor der Unterbrechung, zurückkehrt.

7. Vorrichtung nach Anspruch 6, **dadurch gekennzeichnet, dass** die Schnittstelleneinheit speziell als Schlagapparat (10) eingerichtet ist, mindestens einen Beschleunigungs- oder Bewegungssensor (66, 68) aufweist, der so eingerichtet ist, dass ein erstes, elektronisch auswertbares Signal als Reaktion auf ein Greifen des Schlagapparats (10) durch die Bedienperson, und ein zweites elektronisch auswertbares Signal als Reaktion auf eine Schlagbewegung durch den Benutzer erzeugt wird.

8. Vorrichtung nach einem der Ansprüche 6 oder 7, **dadurch gekennzeichnet, dass** die Übertragungseinheit (12), auf der Basis von Radio, Ultrasound oder Infrarot Signalen, zum Herstellen einer drahtlosen Verbindung zwischen der Schnittstelleneinheit (10) und der Video und/oder Audioausgabeeinrichtung (14) des Personal Computers(14) ausgebildet ist.

9. Vorrichtung nach Anspruch 7 oder 8, **dadurch gekennzeichnet, dass** der Schlagapparat (10) die Form einer Keule (10) mit einem Griff- und einen Schlagabschnitt (34, 36) aufweist, wobei elektronische Komponenten des Schlagapparats im Inneren des Griffabschnitts (34) vorgesehen sind.

10. Vorrichtung nach Anspruch 9, **dadurch gekennzeichnet, dass** der Schlagabschnitt (36) ein Gestell (44) aufweist, der mit einem Bezug (50) aus flexiblem Material überzogen ist und das einen Hohlraum bildet.

11. Vorrichtung nach einem der Ansprüche 7 bis 10, **dadurch gekennzeichnet, dass** durch eine vorbestimmte Vibrations- oder Bewegungsvorrichtung, die eine sensuelle Wirkung aufweist und die im Schlagapparat vorgesehen ist und so mit der Übertragungseinheit (12) verbunden und ausgebildet ist, dass als Reaktion auf das elektrisch auswertbare Signal eine von der Bedienperson fühlbare Bewegung generiert wird.

12. Vorrichtung nach einem der Ansprüche 6 bis 11, **dadurch gekennzeichnet, dass** die Schnittstelleneinheit eine zusätzliche Video und/oder Audioausgabeeinheit aufweist.

## Revendications

1. Une méthode convenable pour équilibrer les émotions positives ou négatives d'une personne travaillant avec un ordinateur individuel (PC) en fournissant un dispositif pour changer le comportement comprenant les étapes suivantes:
actionnement manuel d'un dispositif d'interface (10) fourni en tant qu'interface matérielle externe interactive supplémentaire, possédant une structure mécanique spécifique et des moyens de détection (16), adapté spécifiquement pour détecter le contact et/ou le mouvement physique prédéterminé appliqué aux moyens de détection susmentionnés (16) par l'opérateur, ce contact et/ou mouvement physique étant interprété comme une réponse physique à une émotion positive ou négative prédéterminée de l'opérateur, ce dispositif d'interface (10) étant connecté à l'ordinateur individuel susmentionné;
génération d'un signal de détection électrique en réponse à cette manoeuvre;
traitement électronique de ce signal de détection électrique par l'ordinateur individuel susmentionné et génération électronique d'un signal de sortie acoustique et/ou optique prédéterminé et spécifiquement adapté sur un écran optique informatique ou au travers d'une carte son informatique, connecté à l'ordinateur individuel;
ces signaux de sortie acoustiques et optiques prédéterminés sont une réaction immédiate et spécifique par l'ordinateur individuel et sont directement déclenchés par la manoeuvre, ils permettent la perception visuelle ou acoustique par la personne de telle sorte qu'un effet de compensation pour les émotions positives ou négatives soit obtenu, ces signaux de sortie acoustiques et optiques interrompent une manoeuvre de routine normale de l'ordinateur individuel et sont convenablement différents de tout signal de sortie pouvant provenir de cet appareil de traitement pendant la manoeuvre de routine normale et où la durée d'un signal de sortie généré est limitée à un temps prédéterminé et aucune interaction avec l'ordinateur individuel autre que la génération du signal de sortie ne puisse se produire pendant ce temps, avant que l'ordinateur individuel ne revienne en mode normal de fonctionnement, comme avant l'interruption.

2. La méthode selon la revendication 1, où l'étape d'actionnement manuel de ce dispositif d'interface comprend des mouvements prédéterminés de coups, de frottements, de saisie, de claquement ou de caresse appliqués sur ce dispositif d'interface.

3. La méthode selon la revendication 1 ou 2, où ces signaux de sortie comprennent un premier signal de sortie, produit en réponse à un premier signal de détection électrique et un second signal de sortie différent du premier signal de sortie, produit en réponse à un deuxième signal de détection électrique postérieur au premier signal de détection électrique.

4. La méthode selon la revendication 3, où le premier signal de détection électrique est généré en réponse à un mouvement de saisie prédéterminé appliqué sur ce dispositif d'interface par la personne et le second signal de détection électrique est généré en réponse à un mouvement de coup ou de claquement appliqué sur ce dispositif d'interface après le mouvement de saisie.

5. La méthode selon une des revendication 1 à 4, où l'étape de génération d'un signal de sortie acoustique et/ou optique sur l'ordinateur individuel comprend l'affichage d'une image optique ou d'une séquence d'images prédéterminée, ou l'affichage d'images animées en deux ou trois dimensions prédéterminées et/ou la sortie de signaux vocaux ou musicaux prédéterminés.

6. Appareil pour la production d'une réaction optique et/ou acoustique sur un ordinateur individuel à une manoeuvre manuelle pour exécuter la méthode selon une des revendications 1 à 5, comprenant :
un dispositif d'interface (10) qui est fourni en tant qu'interface matérielle externe interactive supplémentaire, possédant une structure mécanique spécifique et des moyens de détection (16), actionné par un opérateur au moyen d'un contact et/ou mouvement physique prédéterminé appliqué à ces moyens de détection (16) par l'opérateur, interprété comme une réponse physique à une émotion positive ou négative de l'opérateur et qui est spécifiquement adapté pour détecter le contact et/ou mouvement susmentionné et
pour produire un signal de détection électrique en tant que réaction à cela,
une unité de transmission (12) pour la réception du signal de détection et un dispositif de sortie optique et/ou acoustique sur l'ordinateur individuel (14) qui est connecté à l'unité de transmission (12) pour générer électroniquement un signal de sortie acoustique et/ou optique prédéterminé et adapté spécifiquement sur un écran optique informatique ou au travers d'une carte son informatique, connecté à l'ordinateur individuel, en tant que réaction au signal de détection électrique, ces signaux de sortie acoustiques et optiques prédéterminés sont une réaction immédiate et spécifique par l'ordinateur individuel et sont directement déclenchés par la manoeuvre, ils permettent la perception visuelle ou acoustique par la personne de telle sorte qu'un effet de compensation pour les émotions positives et négatives soit obtenu, les signaux de sortie acoustiques'et optiques interrompent une manoeuvre de routine normale de l'ordinateur individuel et sont convenablement différents de tout signal de sortie pouvant provenir de cet appareil de traitement pendant la manoeuvre de routine normale et où la durée d'un signal de sortie généré est limitée à un temps prédéterminé et aucune interaction avec l'ordinateur individuel autre que la génération du signal de sortie ne puisse se produire pendant ce temps, avant que l'ordinateur individuel ne revienne en mode normal de fonctionnement, comme avant l'interruption.

7. Appareil selon la revendication 6, **caractérisé par le fait que** le dispositif d'interface est un dispositif de coup (10) spécifique possédant au moins un détecteur d'accélération ou de motion (66, 68) qui est conçu de telle sorte qu'un premier signal pouvant être évalué électroniquement est produit en tant que réaction au dispositif de coup (10) qui est saisi par l'opérateur et un deuxième signal pouvant être évalué électroniquement est produit en tant que réaction au mouvement de coup de l'opérateur.

8. Appareil selon une des revendications 6 à 7, **caractérisé par le fait que** l'unité de transmission (12) est conçue sur la base de signaux de radio, ultrasons ou infrarouges pour obtenir une connexion sans fil entre le dispositif d'interface (10) et les moyens de sortie optiques et/ou acoustiques de l'ordinateur individuel (14).

9. Appareil selon une des revendications 7 à 8, **caractérisé par le fait que** le dispositif de coup (10) est en forme de crosse (10) avec une portion de saisie et une portion de coup (34, 36), où les composants électroniques du dispositif de coup sont fournis à l'intérieur de la portion de saisie (34).

10. Appareil selon la revendication 9, **caractérisé par le fait que** la portion de coup (36) possède un cadre (44) recouvert d'une couche (50) de matériau flexible et qui forme une cavité creuse.

11. Appareil selon une des revendications 7 à 10, **caractérisé par** un dispositif de vibration ou de motion prédéterminée qui possède une action de détection et qui est fourni dans le dispositif de coup, ce dispositif est connecté à l'unité de transmission (12) et construit de telle sorte qu'une motion qui peut être sentie par l'opérateur est générée en tant que réaction pour le signal pouvant être évalué électroniquement.

12. Appareil selon une des revendications 6 à 11, **caractérisé par** un appareil de sortie optique et/ou acoustique supplémentaire fourni dans le dispositif d'interface.
